# EUROPÄISCHE PATENTSCHRIFT

(11) **EP 0 938 656 B1**
(45) Veröffentlichungstag und Bekanntmachung des Hinweises auf die Patenterteilung: **26.10.2005**
(21) Anmeldenummer: 97954883.1
(22) Anmeldetag: 18.11.1997
(51) Int. Cl.: G01N 21/77, G01N 21/05

(54) **MESSVORRICHTUNG MIT EINEM PLANAREN OPTISCHEN WELLENLEITER**
MEASUREMENT DEVICE COMPRISING A PLANAR OPTICAL WAVEGUIDE
DISPOSITIF DE MESURE COMPRENANT UN GUIDE D'ONDE OPTIQUE PLANAIRE

(30) Priorität: 18.11.1996 EP 96810807; 18.11.1996 EP 96810808
(43) Veröffentlichungstag der Anmeldung: 01.09.1999
(73) Patentinhaber: Novartis AG, 4056 Basel (CH)
(72) Erfinder: Kraus, Gerolf, 79415 Bad Bellingen (DE); Pawlak, Michael, 79725 Laufenburg (DE); Duveneck, Gert Ludwig, 79189 Bad Krozingen (DE); Oroszlan, Peter, 4053 Basel (CH); Helg, Andreas, 4313 Möhlin (CH); Bruno, Alfredo Emilio, 4105 Biel-Benken (CH)
(74) Vertreter: Dannappel, Hans-Jochen
(86) Internationale Anmeldenummer: PCT/EP1997/006443
(87) Internationale Veröffentlichungsnummer: WO 1998/022799

(56) Entgegenhaltungen:
- WO-A-90/05295
- WO-A-96/35940
- WO-A-97/01087
- DEGRANDPRE M D ET AL: "THIN FILM PLANAR WAVEGUIDE SENSOR FOR LIQUID PHASE ABSORBANCE MEASUREMENTS" ANALYTICAL CHEMISTRY, Bd. 62, Nr. 18, 15.September 1990, Seiten 2012-2017, XP000165595
- YANG L ET AL: "CHEMICAL SENSING USING SOL-GEL DERIVED PLANAR WAVEGUIDES AND INDICATOR PHASES" ANALYTICAL CHEMISTRY, Bd. 67, Nr. 8, 15.April 1995, Seiten 1307-1314, XP000509993

## Beschreibung

Die Erfindung betrifft eine Vorrichtung, bestehend aus einem optischen Wellenleiter, der wenigstens über ein diffraktives Element zur Einkopplung von Anregungsstrahlung in die wellenleitende Schicht verfügt, und auf dessen wellenleitender Schicht sich eine zweite dicht verschliessende Schicht aus einem Material befindet, das wenigstens an der Auflageoberfläche im Bereich der geführten Anregungsstrahlung mindestens in der Eindringtiefe des evaneszenten Feldes sowohl für die Anregungsstrahlung als auch für die evaneszent angeregte Strahlung transparent ist, und das wenigstens in einem Teilbereich der geführten Anregungsstrahlung eine Aussparung für eine Analyseprobe aufweist, deren Tiefe wenigstens der Eindringtiefe des evaneszenten Feldes entspricht, und wobei das diffraktive Element im Einkoppelbereich der Anregungsstrahlung vom Material der zweiten Schicht vollständig bedeckt ist. Die Erfindung betrifft femer ein Verfahren zur Detektion von evaneszent zur Lumineszens anregbaren Molekülen in einer Analytprobe unter Verwendung der Vorrichtung.

Auf dem Gebiet insbesondere der biochemischen Analytik sind in jüngerer Zeit planare Wellenleiter zur Erzeugung und Detektion evaneszent angeregter Strahlung entwickelt worden. Im evaneszenten Feld wird im Kontakt mit einer Analytprobe eine Lumineszens, zum Beispiel Fluoreszens, erzeugt, deren Messung eine qualitative oder quantitative Bestimmung von Substanzen auch in sehr niedrigen Konzentrationen ertaubt. Die isotrop in den Raum austretende evaneszent angeregte Strahlung wird mittels geeigneter Messvorrichtungen wie Photodioden, Photomultiplier oder CCD-Kameras bestimmt. Diese Methode ist zum Beispiel in der WO 95/33197 offenbart. Es ist auch möglich, den in den Wellenleiter zurück gekoppelten Anteil der evaneszent angeregten Strahlung über ein diffraktives optisches Element, zum Beispiel einem Gitter, auszukoppeln und zu messen. Diese Methode ist zum Beispiel in der WO 95/33198 beschrieben.

In der Affinitätssensorik werden zur spezifischen Erkennung eines Analyten in einer Probe, welche aus einem komplexen Stoffgemisch bestehen kann, und zur Bindung der Analytmoleküle an der Oberfläche des Wellenleiters, im Bereich der Eindringtiefe des evaneszenten Feldes, biochemische Erkennungselemente entweder direkt oder über eine Haftvermittlungsschicht auf der Wellenleiteroberfläche immobilisiert. Zum Nachweis des Analyten wird die Probe in Lösung, entweder im Stop und Fluß oder im Durchfluss, mit den auf der Wellenleiteroberfläche immobilisierten Erkennungselementen in Kontakt gebracht.

Unter Verwendung von Messzellen, in welchen die Probenflüssigkeit in Kontakt mit den diffraktiven Einkoppelementen kommt, tritt dabei das Problem auf, dass sich die Bedingungen für die Einkopplung des Anregungslichts durch molekulare Adsorption oder Bindung auf den Einkoppelementen ändem können. Zusätzlich kann durch Anregung von ungebundenen lumineszenten oder fluoreszenten Molekülen mittels des Anteils des Anregungslichts, das nicht in den Wellenleiter eingekoppelt wird, sondem als nullte Ordnung ungebeugt in die Lösung eintritt, Untergrundlumineszenz oder -fluoreszenz in der Tiefe der Probe angeregt werden, welche über das Einkoppelgitter teilweise in den Wellenleiter einkoppeln und die Genauigkeit und Empfindlichkeit der Bestimmung des Analyten beeinträchtigen kann.

Eine Abtrennung des Einkoppelements vom Kontaktbereich mit der Probe mittels Materialien, an welche keine besonderen Anforderungen hinsichtlich Transparenz und Brechungsindex gestellt werden, kann zu einer erheblichen Beeinträchtigung der Lichtleitung, möglicherweise sogar zu ihrer völligen Unterdrückung, im für die Messung relevanten Kontaktbereich mit der Probe führen. Diese Problemstellung wird in der Wo 97/01087 näher beschrieben.

Zur Verminderung dieser Nachteile wird in der WO 97/01087 eine Gegenflusszelle beschrieben, bei der man mittels einer im Gegenstrom zur Analytprobe geführten transparenten und nicht spezifisch mit den Erkennungselementen wirkenden Referenzflüssigkeit im Bereich von Einkoppelelementen optischer Wellenleiter ein probenfreies Sperrvolumen erzielt, um für konstante Verhältnisse im Einkoppelbereich der Anregungsstrahlung zu sorgen. Diese speziell für die Messung evaneszent angeregter Strahlung verbesserte Ausführungsform ist jedoch technisch relativ aufwendig, insbesondere für Stop/Fluss-Anwendungen kaum einsetzbar und daher im Sinne einer leichten Handhabbarkeit für einen routinemässigen Einsatz in zum Beispiel diagnostischen Vorrichtungen wenig geeignet.

In Analytical Chemistry, Band 62, Nr. 18 (1990), Seiten 2012-2017 wird eine auf einem optischen Wellenleiter mit Ein- und Auskoppelgitter aufgebrachte Durchflusszelle aus Silicon-Gummi beschrieben. Das Ein- und Auskoppelelement liegen im Bereich des Probenflusskanals. Es werden mit dieser Anordnung Veränderungen der Lichtabsorption und des Brechungsindexes gemessen, ohne eine selektive Wechselwirkung mit spezifischen Erkennungselementen an der Wellenleiteroberfläche. Für den Analyten, eine Farbstofflösung bei der absorptionsabhängigen Messung beziehungsweise Flüssigkeiten unterschiedlicher Brechzahlen bei der brechungsindexabhängigen Messung, werden Adsorptionserscheinungen auf der Oberfläche nicht in Betracht gezogen. Bei diesen sehr unempfindlichen Messungen sind tatsächlich die zu erwartenden Änderungen des effektiven Brechungsindex für einen im Wellenleiter geführten Mode, selbst bei Adsorption einer Monolage von Molekülen, vernachlässigbar gegenüber den starken Veränderungen des Brechungsindexes der zugeführten Lösungen, im Gegensatz zu den zu erwartenden Störungen bei der sehr viel empfindlicheren Methode der Bestimmung der im evaneszenten Feld erzeugten Lumineszenz. Im Falle der brechungsindexabhängigen Messmethode auf Grundlage der Änderung des Ein- oder Auskoppelwinkels ist der Probenkontakt mit den Koppelelementen selbstverständlich sogar notwendig zur Erzeugung des Messignals. Aufgrund dieser Konfiguration, mit innerhalb des Probenflusskanals befindlichem Ein- und Auskoppelelement, hat die Probenzelle lediglich die Aufgabe der Abdichtung gegen Flüssigkeitsaustritt, ohne jegliche weitere Ansprüche an optische Eigenschaften des Materials.

Zur Durchführung von Analytbestimmungen, welche auf der Messung der im evaneszenten Feld eines Wellenleiters erzeugten Lumineszenz beruhen, besteht also ein Bedarf an einer Vorrichtung, mit der durch einen planaren optischen Wellenleiter evaneszent angeregte Strahlung mit hoher Konstanz und Messgenauigkeit bestimmt werden kann, und gleichzeitig eine einfache Herstellung der Messvorrichtung und eine einfache Handhabbarkeit erzielt wird.

Es wurde nun überraschend gefunden, dass man
a) eine hohe Messgenauigkeit erzielt,
b) eine ausgezeichnete Messkonstanz erreicht,
c) eine hohe Messempfindlichkeit erzielt,
d) eine längere Lagerung der befüllten Vorrichtung mit insbesondere immobilisierten Analytmolekülen möglich ist, und
e) messtechnisch einfach handhabbare Vorrichtungen bereitstellt,
wenn die Vorrichtung aus Wellenleiter und Probenaufnahme so gestaltet wird, dass das diffraktive Element zur Einkopplung von Anregungsstrahlung von einer für die Anregungsstrahlung und die evaneszent angeregte Strahlung transparenten Schicht wenigstens im Einkoppelbereich der Anregungsstrahlung vollständig bedeckt ist.

Dadurch, dass die Ausnehmung dem Einkoppelelement bezüglich d er Ausbreitungsrichtung von Anregungsstrahlung nachgeordnet und dass das diffraktive Element (Einkoppelelement) von einer die Ausnehmung bildenden Schicht bedeckt ist, ergeben sich bei dem Einkoppelelement gleichbleibende Einkoppelbedingungen für die Anregungsstrahlung. Zum anderen sind Brechungsindexsprünge im Eindringbereich von Anregungsstrahlung in die an den Wellenleiter angrenzende Materie weitestgehend minimiert. Man erreicht eine weitgehend störungsfreie Führung der Anregungsstrahlung und evaneszent angeregter und rückgekoppelter Strahlung in dem Wellenleiter, was zu einer hohen Signalausbeute führt und beispielsweise auch unter häufig nicht ganz optimalen Untersuchungsbedingungen im routinemässigen Einsatz noch verwertbare Analyseergebnisse liefert.

Ein erster Gegenstand der Erfindung ist eine Vorrichtung zusammengesetzt aus (a) einem planaren optischen Wellenleiter, bestehend aus einem transparenten Träger (40) und einer wellenleitenden Schicht (41), wobei der Wellenleiter wenigstens über ein diffraktives Element (42) zur Einkopplung von Anregungsstrahlung in die wellenleitende Schicht und zur Erzeugung eines evaneszenten Feldes verfügt, dadurch gekennzeichnet, dass (b) auf dessen wellenleitender Schicht eine dicht verschliessende Schicht (43) aus einem Material aufliegt, das wenigstens an der Auflageoberfläche mindestens 0,5 µm sowohl für Anregungsstrahlung als auch für evaneszent angeregte Strahlung transparent ist, und das in wenigstens einem Teilbereich der geführten Anregungsstrahlung entweder wenigstens eine nach oben offene Aussparung (45), oder wenigstens eine über einen Zuflusskanal (2) und Abflusskanal (3) verbundene, nach oben geschlossene Aussparung (6) zur Aufnahme einer Analysenprobe aufweist, deren Tiefe wenigstens 0,5 µm beträgt, und wobei das diffraktive Element (42) von der dicht verschliessenden Schicht (43) vollständig bedeckt ist.

Optische Wellenleiter mit einem oder zwei diffraktiven Elementen zur Einkopplung der Anregungsstrahlung und Auskopplung der Lumineszensstrahlung und ihre Dimensionierung für Bestimmungen von Analytmolekülen nach der Fluoreszensmethode sind bekannt und zum Beispiel in der WO 95/33197 und der WO 95/33198 beschrieben. Unter diffraktiven Elementen werden Ein- Bzw. Auskoppelelemente für Lichtstrahlung verstanden. Häufig werden Gitter verwendet, die auf verschiedene Weise hergestellt werden können. Zum Beispiel können solche Gitter in dem transparenten Träger oder der wellenleitende Schicht angeordnet sein und bei der Formgebung oder nachträglich eingeprägt werden. Es ist auch möglich, solche Gitter mittels ablativer Verfahren (Laserbestrahlung) zu erzeugen. Andere Herstellungsverfahren sind holographische Aufzeichnungen oder Einlagerung von lonen durch lonenbeschuss.

Die eine Aussparung bildende Schicht (43) ist wenigstens an der Auflageoberfläche für elektromagnetische Strahlung im Bereich der Anregungswellenlänge und der Lumineszenzwellenlänge transparent. Es kann sich um ein anorganisches Material wie zum Beispiel Glas oder Quarz oder um transparente organische Polymere (organische Gläser) wie zum Beispiel Polyester, Polycarbonate, Polyacrylate, Polymethacrylate oder Photopolymerisate handeln. Bevorzugt wird die Schicht (43) von einem Elastomer gebildet. Besonders geeignet sind Elastomere von Polysiloxanen, wie zum Polydimethylsiloxane, bei denen es sich um weiche und schmiegsame sowie oft selbsthaftende Materialien handelt. Die Materialien für die Schicht (43) sind bekannt und sind zum Teil im Handel erhältlich.

Die Schicht (43) mit wenigstens einer Aussparung kann mittels üblicher Formgebungsverfahren hergestellt werden, zum Beispiel Giess- und Pressverfahren, oder mittels Schleif-, Stanz- und Fräsverfahren aus entsprechend vorgeformten Halbzeugen. Die Schicht (43) kann auch aus photopolymerisierbaren Substanzen bestehen, die mittels photolitographischer Verfahren direkt auf die wellenleitende Schicht aufgebracht werden können.

Mit sehr glatten Oberflächen (Oberflächenrauhigkeit im Nanometerbereich oder darunter) kann bei steifen Materialien die Selbsthaftung durch Adhäsion zu dichten Verschlüssen führen. Elastomere sind im allgemeinen selbsthaftend. Eine möglichst geringe Oberflächenrauhigkeit ist auch sehr wünschenswert, um eine Lichtstreuung zu unterdrücken. In diesen Fällen wird die Schicht (43) vorzugsweise als separater Körper hergestellt und auf den Wellenleiter, an dessen Oberfläche sich, gegebenenfalls auf einer zusätzlichen dünnen (d.h. < 100 nm) Haftvermittlungsschicht, immobilisierte Erkennungselemente befinden können, in dicht abschliessenden Kontakt gebracht.

Die Schicht (43) kann aus einem einzigen, zumindest bei der Anregungswellenlänge und der Lumineszenzwellenlänge des Analyten transparenten und nicht lumineszierenden Material bestehen oder auch als zweilagige Schicht vorliegen, deren erste, welche mit der Wellenleiteroberfläche in Kontakt gebracht wird, bei A nregungswellenlänge und L umineszenswellenlänge des Analyten transparent und nicht lumineszierenden sein muss, während die dann anschliessende Deckschicht dann vorzugsweise strahlungsabsorbierend ausgebildet ist. Dabei umfasst die Dicke der ersten Schicht in Kontakt mit der Wellenleiteroberfläche wenigstens die Eindringtiefe (44) des evaneszenten Feldes, d. h. mindestens etwa 0,5 µm. Vorzugsweise ist diese erste Schicht 0,5 µm bis 10 mm, bevorzugter 0,01 mm bis 10 mm dick.

Die Tiefe der Aussparungen kann wenigstens der Eindringtiefe des evaneszenten Feldes, also etwa 0,5 µm, entsprechen. Im allgemeinen beträgt die Tiefe bevorzugt 0,5 µm bis 10 mm, bevorzugter 0,01 bis 10 mm, bevorzugter 0,05 bis 5 mm, und besonders bevorzugt 0,05 bis 2 mm.

In einer vorteilhaften Ausgestaltung werden Brechungsindexsprünge zwischen der wellenleitenden Schicht (41) und der Schicht 43 vermieden. Dies kann dadurch erfolgen, dass die Begrenzung der Aussparung an der Auflage senkrecht zur wellenleitenden Schicht gerundet gestaltet ist. Gerundeter Uebergang senkrecht zur Oberfläche des Wellenleiters, an den Begrenzungen der Aussparungen, bedeutet, dass ein rechter Winkel vermieden wird. Die Rundung kann zum Beispiel Teil eines kreisförmigen, parabelförmigen oder hyperbelförmigen Verlaufs sein. Bei weichen und schmiegsamen Materialien für die Schicht (43) bildet sich die Rundung durch das Anpressen auf den Wellenleiter von selbst aus. Die Rundung kann aber auch durch das Formgebungsverfahren vorgebildet werden. Brechungsindexsprünge können auch vermieden werden, wenn die Aussparung in Richtung der Ausbreitung des Anregungslichtes gegebenenfalls kontinuierlich verjüngt wird. Eine andere Möglichkeit besteht in der Wahl des Materials der Schicht (43) mit einem Brechungsindex nahe oder gleich des Brechungsindexes der Analytprobe.

Die isotrop in den Raum austretende evaneszent angeregte Strahlung kann mittels geeigneter Messvorrichtungen bestimmt werden. Die erfindungsgemässe Vorrichtung kann aber auch ein zweites diffraktives Element im Wellenleiter zur Auskopplung evaneszent angeregter und in den Wellenleiter zurückgekoppelter Strahlung enthalten. Vorteilhaft ist auch dieses diffraktive Element zumindest im Auskoppelbereich vollständig vom Material der Schicht (43) bedeckt, und vorteilhaft ist der Uebergang der Schicht (43) senkrecht zur Wellenleiteroberfläche auch in diesem Fall wenigstens in Richtung dieses diffraktiven Elementes gerundet.

In einer Weiterbildung der erfindungsgemässen Vorrichtung ist eine Vervielfachung der Aussparungen vorgesehen, so dass mehr als eine, zum Beispiel 2 bis 100 und mehr, bevorzugt 4 bis 100 Aussparungen vorgesehen sind, die längs oder quer zur Ausbreitung der Anregungsstrahlung angeordnet sein können. Es können zum Beispiel nach einem diffraktiven Einkoppelelement bis vor ein gegebenenfalls vorhandenes diffraktives Auskoppelelement Aussparungen hintereinander quer zur Ausbreitung der Anregungsstrahlung in einer Reihe angeordnet sein; in diesem Fall werden bevorzugt 2 bis 10 und besonders bevorzugt 2 bis 5 Aussparungen vorgesehen. Eine andere Möglichkeit besteht darin, dass mehrere einzelne diffraktive Elemente in einer Reihe oder ein langes diffraktives Element vorgesehen sind, und die Aussparungen parallel (das heisst längs) zur Ausbreitungsrichtung des Anregungslichtes angeordnet sind. In diesem Fall können 100 und mehr Aussparungen vorhanden sein. Zusätzlich ist es möglich, 2 und mehr, zum Beispiel 2 bis 50, bevorzugt 2 bis 20, der vervielfältigten Anordnungen auf der Oberfläche eines grossen planaren Wellenleiters vorzusehen. Diese Vervielfältigungsmöglichkeiten erlauben eine flexible Anpassung der erfindungsgemässen Vorrichtung an praktische Bedürfnisse. Diese Weiterbildungen eignen sich besonders für Reihen-, Vergleichs- und Parallelmessungen, sowie automatisierte Messanordnungen, mittels geeignet gestalteter Messköpfe.

Bei Vervielfältigungen längs (parallel) zur Ausbreitung der Anregungsstrahlung kann es vorteilhaft sein, zur Unterdrückung von Streustrahlung entlang der Aussparungen Licht absorbierende Materialien vorzusehen, zum Beispiel Farbstoffe, Pigmente, Russ, Metalloxide oder Metalle. Diese Materialien können in dafür vorgesehenen zusätzlichen Aussparungen längs der Ausbreitungsrichtung des Anregungslichtes vorhanden sein, oder längs der Ausbreitungsrichtung des Anregungslichtes flächig auf der Oberfläche der wellenleitenden Schicht aufgebracht sein. Zweckmässig sind flächige Ausgestaltungen, die einfach mittels Streich- oder Bedampfungsverfahren herstellbar sind. Die absorbierenden Materialien können auch über den diffraktiven Elementen unter Freihaltung des Einkoppelbereiches aufgebracht sein. Die Vorrichtung kann zum Beispiel so gestaltet sein, dass beidseitig der oder jeder Ausnehmung (6) im Spektralbereich von Anregungsstrahlung (18) und evaneszent angeregter Strahlung (21) absorbierendes Dämpfungsmaterial vorgesehen ist, oder dass das Dämpfungsmaterial (27) als Immersion flächig aufgetragen ist, oder dass Dämpfungsausnehmungen (33) vorgesehen sind, die mit Dämpfungsmaterial füllbar sind. Vorrichtungen mit nach oben offenen Aussparungen können in gleicher Weise gestaltet sein.

Die erfindungsgemässe Vorrichtung kann in verschiedenen Ausführungsformen vorliegen, wobei zwischen Ausführungsformen mit offener Aussparung (Ausführungsform A) und geschlossener Aussparung (Ausführungsform B, Durchflusszellen) unterschieden wird.

### Ausführungsform A

Die offenen Ausnehmungen können eine an sich beliebige Form aufweisen; sie können zum Beispiel quadratisch, rechteckig, rund oder ellipsoid sein. Die Gestaltung von erfindungsgemässen Vorrichtungen kann zum Beispiel der Form bekannter Mikrotiterplatten entsprechen. Die geometrische Anordnung der Ausnehmungen ist an sich beliebig, wobei Reihenanordnungen bevorzugt sind. Für die Ausführungsform B dargestellte und beschriebene Vorrichtungen und Bevorzugungen können sinngemäss auch die Ausführungsform A angewendet werden.

### Ausführungsform B

Bei einer erfindungsgemässen Vorrichtung zur Erzeugung evaneszent angeregter Strahlung, die wenigstens ein Auskoppelelement zur Auskopplung von evaneszent angeregter Strahlung aus dem Wellenleiter aufweist, ist es zweckmässig, dass die Flusszelle auch das oder jedes Auskoppelelement bedeckt. In einer diesbezüglichen Weiterbildung ist vorgesehen, dass die Ausnehmung vollständig zwischen dem oder jedem Einkoppelelement und dem oder jedem Auskoppelelement angeordnet ist, so dass sowohl das oder jedes Einkoppelelement als auch das oder jedes Auskoppelelement frei von Probenmaterial ist Dies hat den Vorteil, dass sowohl bei der Einkopplung als auch bei der Auskopplung von Anregungsstrahlung beziehungsweise evaneszent angeregter Strahlung gleichbleibende, vom Probenmaterial unbeeinflusste Kopplungsbedingungen herrschen.

In Weiterbildungen sind mehrere Ausnehmungen vorgesehen, die längs oder quer zu der Ausbreitungsrichtung von Anregungsstrahlung angeordnet sind. Bei parallel zu der Ausbreitungsrichtung von Anregungsstrahlung ausgerichteten Ausnehmungen ist es zweckmässig, zwischen den Ausnehmungen im Eindringbereich von Anregungsstrahlung und evaneszent angeregter Strahlung im Spektralbereich dieser Strahlungen, beispielsweise vom ultravioletten bis infraroten Spektralbereich, absorbierendes Material vorzusehen, um ein Überkoppeln von Strahlungsanteilen zwischen den Ausnehmungen zu unterbinden. Dies kann beispielsweise durch eine absorbierende Schicht, die zwischen der Flusszelle und dem Wellenleiter aufgebracht wird, erfolgen. In einem anderen Ausführungsbeispiel sind zwischen mehreren parallel zu der Ausbreitungsrichtung von der Anregungsstrahlung ausgerichteten Ausnehmungen mit einer strahlungsabsorbierenden Flüssigkeit füllbare Dämpfungsausnehmungen in die Flusszelle eingebracht, die zu der gleichen Oberflächenseite wie die Ausnehmungen geöffnet sind.

Für einen Einsatz im routinemässigen Analysebetrieb ist es weiterhin zweckmässig, dass die Flusszelle aus einem schmiegsamen Material besteht, das die wenigstens eine Ausnehmung bei Aufbringen auf den Wellenleiter dicht verschliesst. Dadurch ist es ohne weitere Hilfsmittel wie Dichtungen möglich, durch Auflegen einer Flusszelle auf den Wellenleiter leckfrei Probenmaterial durch die Flusszelle zu leiten.

Weitere Vorteile und zweckmässige Ausgestaltungen sind Gegenstand der Unteransprüche sowie der nachfolgenden Beschreibung von Ausführungsbeispielen unter Bezug auf die Figuren der Zeichnung. Es zeigen:
- Fig. 1: in einer perspektivischen Darstellung eine Vorrichtung zur Erzeugung evaneszent angeregter Strahlung mit einer auf einem Schichtwellenleiter angebrachten Flusszelle,
- Fig. 2: die Vorrichtung gemäss Fig. 1 in Draufsicht,
- Fig. 3: die Vorrichtung gemäss Fig. 1 mit dem Verlauf des Brechungsindex in Längsrichtung in dem an den Wellenleiter angrenzenden Material,
- Fig. 4: eine gegenüber Fig. 2 abgewandelte Anordnung des Auslasskanales,
- Fig. 5: eine Vorrichtung zur Erzeugung evaneszent angeregter Strahlung mit einer auf einem Schichtwellenleiter angeordneten Flusszelle mit jeweils drei Probenkanälen und zwischenliegenden Ausnehmungen sowie mit einer auf den Schichtwellenleiter aufgebrachten Dämpfungsschicht,
- Fig. 6: die Vorrichtung gemäss Fig. 5 in Draufsicht,
- Fig. 7: eine Vorrichtung zur Erzeugung evaneszent angeregter Strahlung mit einer auf einem Wellenleiter aufgebrachten Flusszelle mit jeweils drei Probenkanälen und drei zwischenliegenden Ausnehmungen sowie mit zwischen zwei Ausnehmungen vorgesehenen Dämpfungskanalanordnungen,
- Fig. 8 und 9: verschiedene Anordnungen von Ausnehmungen in Flusszellen für Simultanmessungen.
- Fig. 10: eine Vorrichtung mit einer nach oben offenen Aussparung

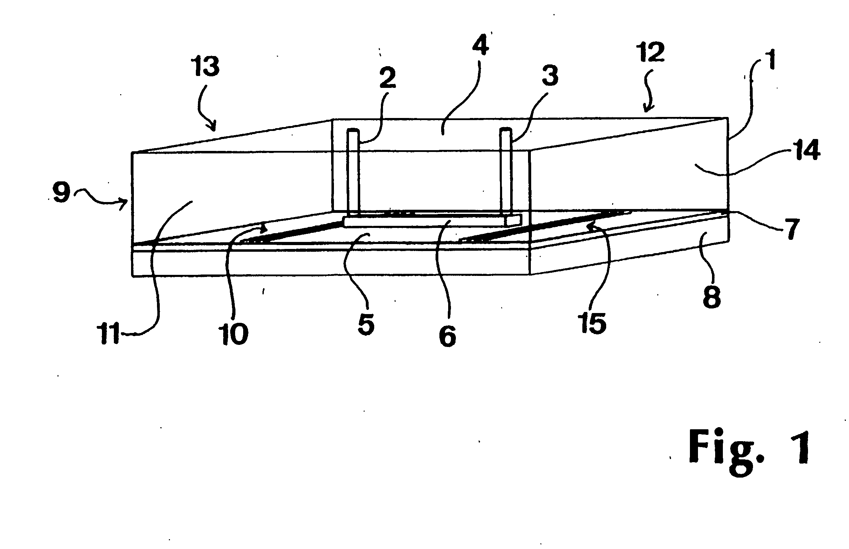

Fig. 1 zeigt in einer perspektivischen Ansicht eine aus einem schmiegsamen Material bestehende Flusszelle 1. Die in Fig. 1 dargestellte Flusszelle 1 ist aus einem elastischen, biegsamen Polymermaterial gefertigt, das wenigstens in sichtbaren und nahen infraroten Spektralbereich für elektromagnetische Strahlung transparent ist. Als Polymermaterial ist vorzugsweise ein Polydimethylsiloxan wie beispielsweise Sylgard 182 beziehungsweise Sylgard 184 (Dow Corning) oder aus der RTVE-Serie (Raumtemperatur-Vemetzbare Elastomere, Wacker Chemitronic) vorgesehen. Insbesondere durch die einfach durch ein Abformverfahren herstellbare Flusszelle 1 ist neben einer Wiederverwendung auch eine Einmalbenutzung noch wirtschaftlich sinnvoll. Die Flusszelle 1 verfügt über einen Einlasskanal 2 als ersten Probenkanal und einen Auslasskanal 3 als zweiten Probenkanal zum Einlass beziehungsweise Auslass von Probenflüssigkeit, wobei diese Funktionen austauschbar sind. Der Einlasskanal 2 und der Auslasskanal 3 erstrecken sich zwischen einer Deckfläche 4 und einer in einer der Deckfläche 4 gegenüberliegenden Auflagefläche 5 eingebrachten Ausnehmung 6 als Fliesskanal. Die Ausnehmung 6 ist an ihrer der Auflagefläche 5 zugewandten Seite offen und erstreckt sich zwischen dem Einlasskanal 2 und dem Auslasskanal 3.

In der Darstellung gemäss Fig. 1 ist die Flusszelle 1 selbsthaftend an einem Wellenleiter 7 beispielsweise aus TiO₂ oder Ta₂O₅ angebracht. In einer Abwandlung ist vorgesehen, die Flusszelle 1 mit einem Haftmittel wie beispielsweise einem transparenten Klebstoff an dem Wellenleiter zu befestigen. Dadurch ist die Ausnehmung 6 dicht verschlossen, so dass ein Flüssigkeitsstrom, der ein zu untersuchendes Probenmaterial enthält, durch den Einlasskanal 2, die Ausnehmung 6 und den Auslasskanal 3 strömen kann. Da das Material der Flusszelle 1 schmiegsam ist, passt es sich flexibel der Oberflächenstruktur des Wellenleiters 7 an und führt somit zu einer Abdichtung, ohne dass weitere Dichtelemente notwendig sind.

Der verhältnismässig dünne Wellenleiter 7 ist auf einem mechanisch stabilen Substrat 8 beispielsweise aus Glas oder einem Polykarbonat aufgebracht und mit diesem fest verbunden. In dem in Fig. 1 dargestellten Ausführungsbeispiel bilden die Flusszelle 1, der Wellenleiter 7 und das Substrat 8 einen quaderförmigen Körper mit bündig abschliessenden seitlichen Begrenzungsflächen. In Abwandlungen sind andere Geometrien wie beispielsweise Ellipsoide, regelmässige oder unregelmässige Vielecke auch mit trapezförmigem Querschnitt vorgesehen.

In den Wellenleiter 7 gemäss Fig. 1 ist quer zu der Ausrichtung der Ausnehmung 6 zwischen einer dem Einlasskanal 2 benachbarten Stimseite 9 und dem Einlasskanal 2 ein Einkoppelgitter 10 als dispersives Einkoppelelement eingebracht, das sich im wesentlichen zwischen den beiden parallel zu der Ausnehmung 6 verlaufenden Seitenflächen 11, 12 einer durch die Flusszelle 1, den Schichtwellenleiter 7 und das Substrat 8 gebildeten Analyseeinheit 13 erstreckt. In dem in Fig. 1 dargestellten Ausführungsbeispiel ist parallel zu dem Einkoppelgitter 10 zwischen dem Auslasskanal 3 und einer auslasseitigen Stimseite 14 als dispersives Auskoppelelement ein Auskoppelgitter 15 in den Schichtwellenleiter 7 eingebracht.

In Abwandlungen sind mehrere Einkoppelgitter und/oder Auskoppelgitter vorgesehen, die als Einkoppelelemente beziehungsweise Auskoppelelemente dienen. Bei einem Erfassen von isotrop in den Raum gestreuten Anteilen von evaneszent angeregter Strahlung sind Auskoppelelemente verzichtbar.

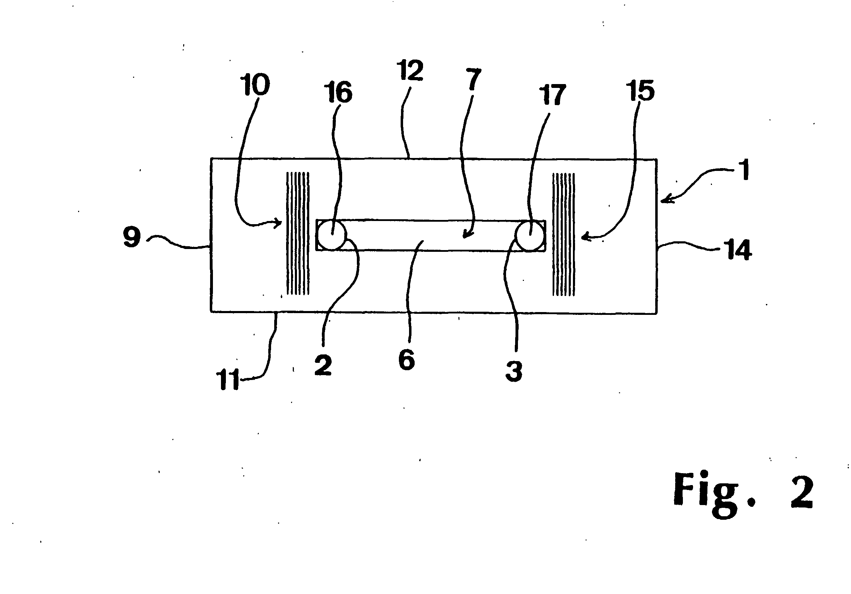

Fig. 2 zeigt eine Draufsicht auf die Deckfläche 4 der Flusszelle 1. Aus Fig. 2 ist ersichtlich, dass sich die Ausnehmung 6 jeweils mit einem Randabstand zwischen dem Einkoppelgitter 10 und dem Auskoppelgitter 15 erstreckt, so dass sowohl das Einkoppelgitter 10 als auch das Auskoppelgitter 15 frei von einer durch den Einlasskanal 2, die Ausnehmung 6 und den Auslasskanal 3 strömenden Probenflüssigkeit ist.

Sowohl der Einlasskanal 2 als auch der Auslasskanal 3 weisen einen runden oder einen nicht dargestellten vieleckigen Querschnitt auf und münden in einer Einlassöffnung 16 als erster Probendurchtrittsöffnung beziehungsweise einer Auslassöffnung 17 als zweiter Probendurchtrittsöffnung in die Ausnehmung 6. In dem in Fig. 2 dargestellten Ausführungsbeispiel sind die Einlassöffnung 16 und die Auslassöffnung 17 unmittelbar an den jeweils dem Einkoppelgitter 10 und dem Auskoppelgitter 15 zugewandten Enden der Ausnehmung 6 angeordnet, wobei der Einlasskanal 2 und der Auslasskanal 3 rechtwinklig zu der Ausnehmung 6 in die Flusszelle 1 eingebracht sind. In einer Abwandlung sind der Einlasskanal 2 und der Auslasskanal 3 schiefwinklig zu der Ausnehmung 6 angeordnet, um den Strömungswiderstand im Bereich der Einlassöffnung 16 und der Auslassöffnung 17 gegenüber einer rechtwinkligen Anordnung zu verringem.

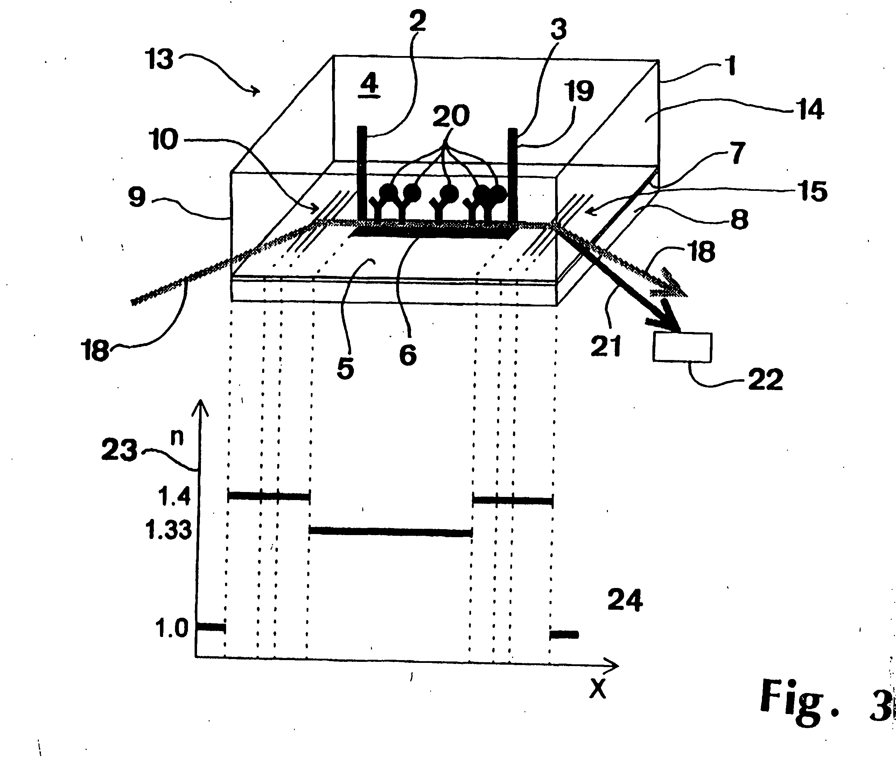

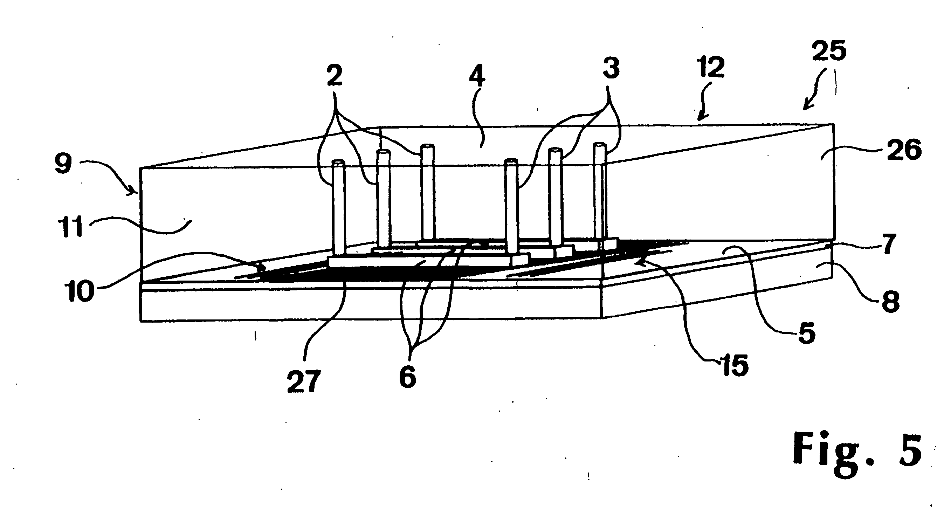

Fig. 3 zeigt in einer perspektivischen Ansicht eine im Bereich des Einkoppelgitters 10 mit Anregungsstrahlung 18 aus einer in Fig. 5 nicht dargestellten Lichtquelle beaufschlagte Vorrichtung zum Erzeugen evaneszent angeregter Strahlung mit der Flusszelle 1, dem auf einem Substrat 8 aufgebrachten Schichtwellenleiter 7 sowie mit einer durch den Einlasskanal 2, die Ausnehmung 6 und den Auslasskanal 3 strömenden Probenflüssigkeit 19. Die Probenflüssigkeit 19 enthält beispielsweise symbolisch dargestellte lumineszierende, zu analysierende Moleküle 20.

Die auf das Einkoppelgitter 10 auftreffende Anregungsstrahlung 18 ist durch Beugung in den Wellenleiter 7 eingekoppelt und breitet sich als geführte Welle in Richtung des Auskoppelgitters 15 aus. Im Bereich der in Richtung des Wellenleiters 7 offenen Ausnehmung 6 der Flusszelle 1 werden die in der Probenflüssigkeit 19 enthaltenen lumineszierenden Moleküle 20 durch den sogenannten evaneszenten Anteil der Anregungsstrahlung 18, das heisst dem in das an den Wellenleiter 7 angrenzende Material eintretenden, exponentiell abklingenden Strahlungsanteil, zur Lumineszenz angeregt. Aufgrund der Transparenz des an den Wellenleiter 7 angrenzendes Bereiches der Flusszelle 1 sowohl für die Anregungsstrahlung 18 als auch für die Lumineszenzstrahlung erreicht die im Wellenleiter 7 geführte Anregungsstrahlung 18 den Bereich der Ausnehmung 6, in dem im evaneszent abklingenden Strahlungstell Moleküle 20 angeregt werden können, deren Lumineszenzstrahlung als evaneszent angeregte Strahlung 21 teilweise in den Wellenleiter 7 zurückkoppelt. Aufgrund der Transparenz des an den Wellenleiter 7 angrenzenden Bereiches der Flusszelle 1 ist sowohl die transmittierte Anregungsstrahlung 18 als auch die in den Wellenleiter 7 eingekoppelte, evaneszent angeregte Strahlung 21 zu dem Auskoppelgitter 15 geführt.

Aufgrund der dispergierenden Wirkung des Auskoppelgitters 15 wird die Anregungsstrahlung 18 von der in der Regel frequenzverschobenen, evaneszent angeregten Strahlung 21 räumlich getrennt In Ausbreitungsrichtung der evaneszent angeregten Strahlung 21 ist eine Detektionseinheit 22 vorgesehen, mit der beispielsweise die Intensität sowie deren spektrale Verteilung analysierbar ist.

Weiterhin ist in Fig. 3 der mit "n" bezeichnete, auf der Ordinate 23 abgetragene Brechungsindex in Abhängigkeit der auf der Abszisse 24 abgetragenen, mit "X" gekennzeichneten Position in Längsrichtung im Eindringbereich der evaneszent angeregten Strahlung 21 dargestellt. Die unterschiedlichen Bereiche in Längsrichtung in bezug auf die Flusszelle 1 sind mit gestrichelten Linien auf die Abszisse 24 angedeutet. Ausserhalb der Flusszelle 1 herrscht in Luft ein Brechungsindex von n = 1,0. Zwischen der dem Einlasskanal 2 zugewandten Stirnseite 9 und dem der Stirnseite 9 zugewandten Ende der Ausnehmung 6 liegt ein Brechungsindex von n = 1,4 vor, der dem Brechungsindex des Materiales entspricht, aus dem die Flusszelle 1 hergestellt ist. Somit liegt in dem Bereich des Einkoppelgitters 10 ein gleichbleibender Brechungsindex vor, der die Einkopplung der Ausgangsstrahlung 18 unter einem bestimmten festen Winkel ermöglicht, der unabhängig von Eigenschaften der Probenflüssigkeit 19 ist.

Entsprechend liegen zwischen der dem Auslasskanal 3 benachbarten Stirnseite 14 und dem der Stimseite 14 zugewandten Ende der Ausnehmung 6 der gleiche Brechungsindex n = 1,4 des Materiales der Flusszelle 1 vor, so dass auch hier konstante Brechungsindexverhältnisse im Bereich des Auskoppelgitters 15 herrschen. Im Bereich der Ausnehmung 6 herrscht der durch die optischen Eigenschaften der Probenflüssigkeit 19 bestimmte Brechungsindex, der bei dem in Fig. 5 dargestellten Ausführungsbeispiel bei n = 1,33 liegt.

Bei der in Fig. 3 dargestellten Anordnung ergibt sich eine weitgehend reflexionsfreie Einkopplung der Anregungsstrahlung 18 in den Wellenleiter 7 und eine aufgrund des nur verhältnismässig geringen Brechungsindexsprunges bei Eintritt des evaneszenten Anteiles der Anregungsstrahlung 18 in die Probenflüssigkeit ein hoher Anteil an weitergeführter Ausgangsstrahlung 18, so dass eine hohe Ausbeute an evaneszent angeregter Strahlung 21 erzielt ist. Durch den verhättnismässig geringen Brechungsindexsprung an dem Auskoppelgitter 15 zugewandten Ende der Ausnehmung 6 ist die Störung der evaneszent angeregten Strahlung 21 ebenfalls verhältnismässig gering, so dass bei Ablenkung durch das Auskoppelgitter 15 eine insgesamt hohe Signalausbeute erzielt ist. Dadurch ist es möglich, auch noch geringe Konzentrationen von lumineszierenden Molekülen 20 in der Probenflüssigkeit 19 nachzuweisen.

Die unterschiedlichen Bereiche in Längsrichtung in bezug auf die Flusszelle 1 sind mit gestrichelten Linien auf die Abszisse 24 angedeutet.

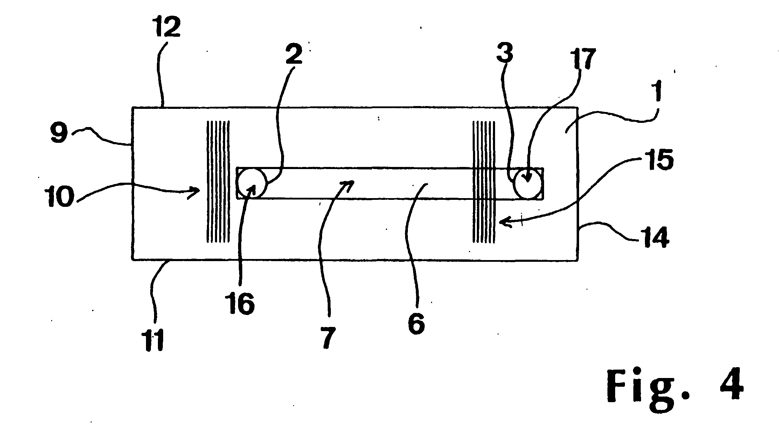

Fig. 4 zeigt in einer Abwandlung eine Flusszelle 1, deren Ausnehmung 6 sich von ihrem der zwischen dem Einkoppelgitter 10 und dem Auskoppelgitter 15 angeordneten Einlassöffnung 16 benachbarten Ende in den Bereich zwischen dem Auskoppelgitter 15 und der dem Auskoppelgitter 15 benachbarten Stimseite 14 erstreckt, so dass die Ausnehmung 6 das Auskoppelgitter 15 überdeckt. Auch bei dieser Ausgestaltung ergibt sich eine hohe eingekoppelte Intensität von Anregungsstrahlung 18, die für die Intensität von evaneszent angeregter Strahlung 21 von vorrangiger Bedeutung ist, da gewisse optische Beeinträchtigungen im Bereich des Auskoppelgitters 15 gegenüber Störungen im Bereich des Einkoppelgitters 10 von untergeordneter Bedeutung sind.

Fig. 5 zeigt eine Simultananalyseeinheit 25, die neben dem auf dem Substrat 8 aufgebrachten Wellenleiter 7 mit Einkoppelgitter 10 und Auskoppelgitter 15 über eine Flusszelle 26 verfügt, die mit jeweils drei Einlasskanälen 2, Auslasskanälen 3 und sich zwischen einem Einlasskanal 2 und einem Auslasskanal 3 erstreckenden Ausnehmungen 6 versehen ist. In einer Abwandlung ist der Wellenleiter 7 so in Streifenform strukturiert, dass ein Streifen des Schichtwellenleiters 7 einer Ausnehmung 6 gegenüberliegt.

Weiterhin ist auf den Wellenleiter 7 beidseitig jeder Ausnehmung 6 eine im Spektralbereich von Anregungsstrahlung 18 und evaneszent angeregter Strahlung 21 absorbierende Dämpfungsschicht 27 aufgebracht, um ein Überkoppeln insbesondere von evaneszent angeregter Strahlung 21 von einer Ausnehmung 6 zu den beiden anderen Ausnehmungen 6 zu verhindern, das zu einer Verfälschung der Messergebnisse führen würde. Durch die jede Ausnehmung 6 längsseitig begrenzende Dämpfungsschicht 27 erfolgt eine starke Absorption von aus dem Bereich der Ausnehmungen 6 heraustretenden Strahlungsanteilen. Dadurch ist es möglich, in den drei Ausnehmungen 6 unterschiedliche Probenflüssigkeiten 19 gleichzeitig zu untersuchen, da auch bei Auskopplung durch das Auskoppelgitter 15 die jeweils evaneszent angeregten Strahlungen 21 räumlich quer zu der Ausbreitungsrichtung separiert sind.

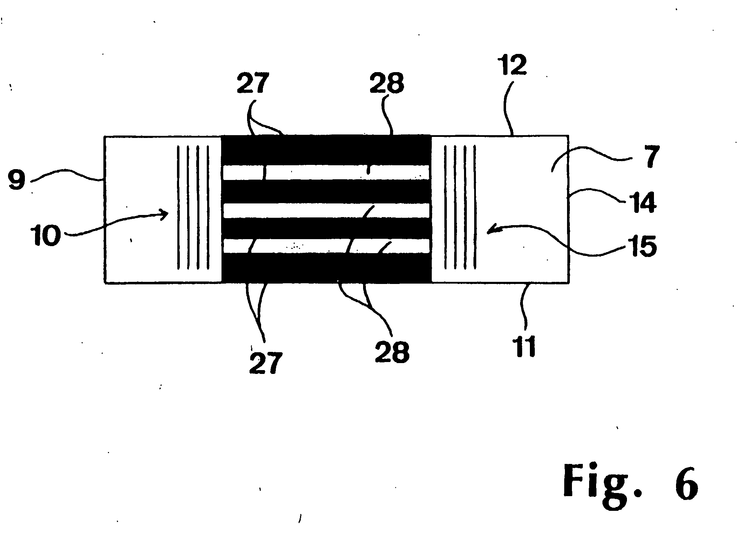

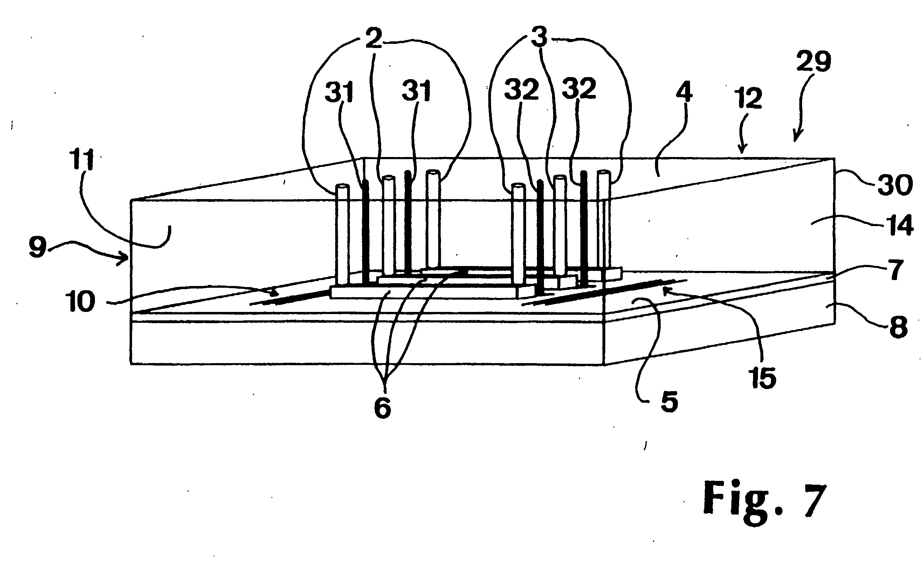

Fig. 6 zeigt eine Draufsicht auf den Wellenleiter 7 der Simultananalyrseeinheit 25 gemäss Fig. 5. Die sich zwischen dem Einkoppelgitter 10 und dem Auskoppelgitter 15 im wesentlichen über die volle Breite des Wellenleiters 7 erstreckende Dämpfungsschicht 27 ist in jeweils parallel zu den Seitenflächen 11, 12 ausgerichteten Führungsbereichen 28 mit rechteckiger Grundfläche unterbrochen. Die Abmessungen der Führungsbereiche 28 entsprechen dabei den Dimensionen der dem Schichtwellenleiter 7 zugewandten Seite der in die Flusszelle 26 gemäss Fig. 7 eingebrachten Ausnehmungen 6. Somit wird über das Einkoppelgitter 10 in den Wellenleiter 7 eingekoppelte Anregungsstrahlung 18 in Längsrichtung in den Führungsbereichen 28 zu dem Auskoppelgitter 15 geführt, ohne dass ein nennenswertes Übersprechen zwischen den Führungsbereichen 28 und somit den durch in den Ausnehmungen strömenden Probenflüssigkeiten 19 stattfinden kann.

In einer gegenüber dem in Fig. 5 und Fig. 6 dargestellten Ausführungsbeispiel modifizierten Abwandlung erstreckt sich die Dämpfungsschicht 27 bis über das Einkoppelgitter 10 und das Auskoppelgitter 15, wobei die Führungsbereiche 28 ebenfalls bis zu dem Einkoppelgitter 10 und dem Auskoppelgitter 15 verlängert sind.

Fig. 7 zeigt in einer perspektivischen Darstellung ein weitere Ausführungsbeispiel einer Simultananalyseeinheit 29, deren Aufbau dem der Simultananalyseeinheit 25 bis auf die Massnahmen zum Verhindern eines Übersprechens entspricht. Demzufolge wird lediglich auf die Unterschiede eingegangen. Die Simultananalyseeinheit 29 verfügt über eine Flusszelle 30, die zwischen den drei Einlasskanälen 2, Auslasskanälen 3 und Ausnehmungen 6 jeweils einen Dämpfungseinlasskanal 31, einen Dämpfungsauslasskanal 32 und in der Darstellung gemäss Fig. 7 durch die Ausnehmungen 6 verdeckten, zu dem Schichtwellenleiter 7 hin offene Dämpfungsausnehmung aufweist. In der Darstellung gemäss Fig. 7 ist in die Dämpfungseinlasskanäle 31, Dämpfungsauslasskanäle 32 und die Dämpfungsausnehmung ein geschwärzt dargestelltes Dämpfungsmittel, beispielsweise mit einem im Spektralbereich von Anregungsstrahlung 18 und evaneszent angeregter Strahlung 21 absorbierenden Farbstoff versehene Flüssigkeit, eingefüllt.

In einer Abwandlung des in Fig. 7 dargestellten Ausführungsbeispiels sind die Dämpfungsausnehmungen 33 bis in den Bereich des Einkoppelgitters 10 und des Auskoppelgitters 15 unter entsprechendem Versatz der Dämpfungseinlasskanäle 31 und Dämpfungsauslasskanäle 32 verlängert, so dass auch insbesondere im Bereich des Auskoppelgitters 15 keine Überlagerung von im Bereich von verschiedenen Ausnehmungen 6 erzeugter evaneszent angeregter Strahlung 21 stattfinden kann.

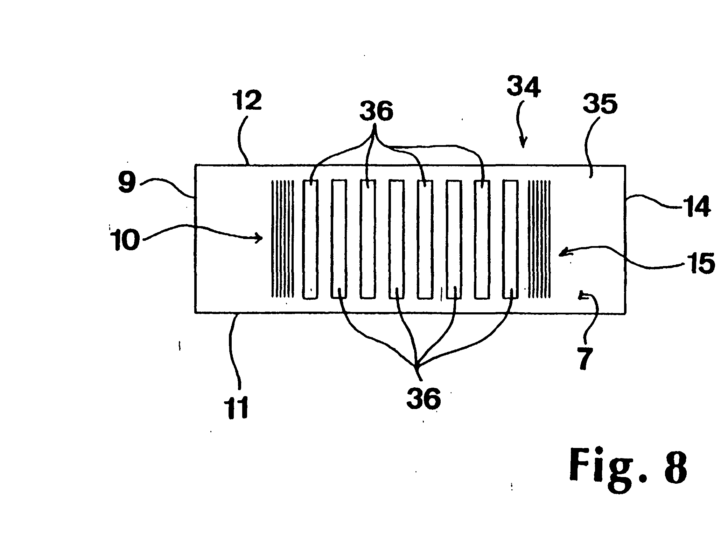

Fig. 8 zeigt eine weitere Simultananalyseeinheit 34 mit einer Flusszelle 35 in Draufsicht auf einen parallel zu einem Wellenleiter 7 gelegten Schnitt. Die Flusszelle 35 verfügt über eine Anzahl von Ausnehmungen 36, die zweckmässigerweise äquidistant zwischen dem Einkoppelgitter 10 und dem Auskoppelgitter 15 beabstandet und quer zu der Ausbreitungsrichtung von über das Einkoppelgitter 10 eingekoppelte Anregungsstrahlung 18 ausgerichtet sind. Bei der Siultananalyseeinheit 34 sind ebenfalls unterschiedliche, in den Ausnehmungen 36 eingebrachte Probenflüssigkeiten 19 gleichzeitig über die evaneszent angeregten Strahlungen 21 untersuchbar, wobei hier eine definierte Überlagerung der verschiedenen Strahlungsanteile der evaneszent angeregten Strahlungen 21 herbeigeführt ist.

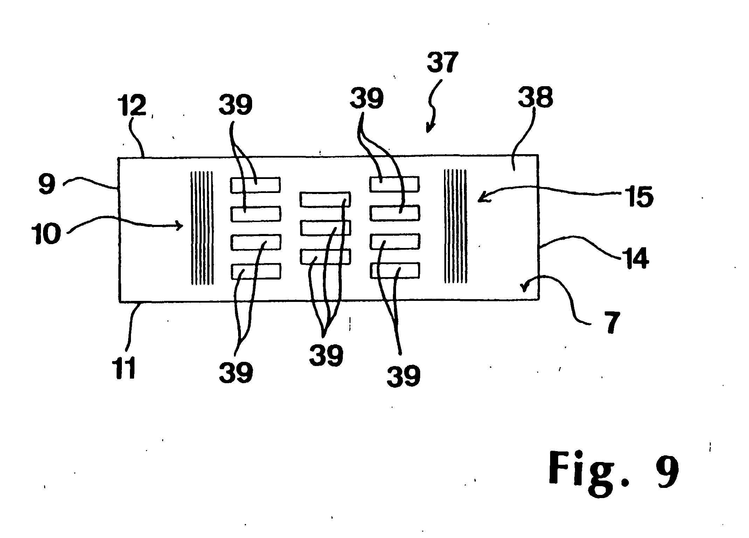

Fig. 9 zeigt ein weiteres Ausführungsbeispiel einer Simultananalyseeinheit 37 in einem Schnitt durch eine Flusszelle 38 in Draufsicht auf einen parallel zu dem Schichtwellenleiter 7 gelegten Schnitt. Die Flusszelle 38 verfügt über eine Anzahl von Ausnehmungen 39, die parallel zwischen den Seitenflächen 11, 12 ausgerichtet sind, sich jedoch jeweils nur über einen Bruchteil des Abstandes zwischen dem Einkoppelgitter 10 und dem Auskoppelgitter 15 erstrecken. In dem in Fig. 9 dargestellten Ausführungsbeispiel beträgt die Länge jeder Ausnehmung 39 etwa ein Fünftel des Abstandes zwischen dem Einkoppelgitter 10 und dem Auskoppelgitter 15. Die Ausnehmungen 39 sind in drei jeweils quer zu der Ausbreitungsrichtung von über das Einkoppelgitter 10 in den Schichtwellenleiter 7 eingekoppelter Anregungsstrahlung 18 verlaufenden Gruppen angeordnet, wobei die Ausnehmungen 39 der dem Einkoppelgitter 10 sowie dem Auskoppelgitter 15 benachbarten Randgruppen fluchtend und die Ausnehmungen 39 der mittleren Gruppe dazu in Lückenbereiche der Randgruppen quer versetzt angeordnet sind. Die in Fig. 9 dargestellte Simultananalyseeinheit 37 eignet sich insbesondere zum Untersuchen einer Vielzahl von Probenflüssigkeiten 19 mit bereits auf verhältnismässig kurzen Wechselwirkungsstrecken zum Nachweis ausreichend intensiver evaneszent angeregter Strahlung 21.

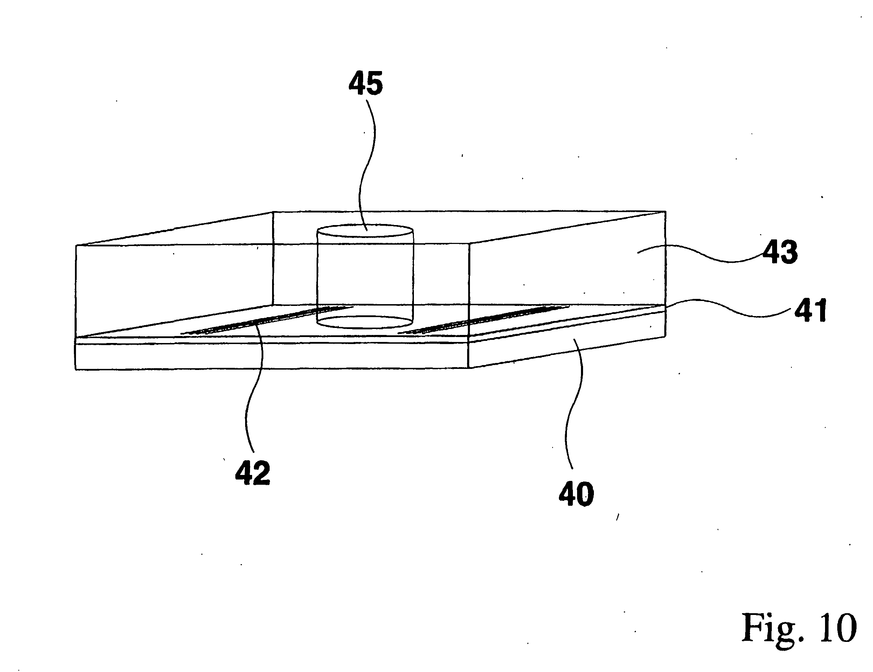

Fig. 10 zeigt ein Beispiel mit nach oben offener Aussparung. Auf einem transparenten Träger (40) mit wellenleitender Schicht 41, einem Einkoppelgitter (42) und einem Auskoppelgitter ist eine selbsthaftende Schicht (43) aufgebracht, das aus Polydimethylsiloxan besteht. In der Schicht (43) ist eine rund und nach oben offene Aussparung vorgesehen, die mit der Analytprobe befüllt werden kann.

Insbesondere bei den in Fig. 8 und Fig. 9 dargestellten Ausführungsbeispielen von Simultananalyseeinheiten 34, 37 ist es zweckmässig, anstatt eines Auskoppelgitters 15 oder zusätzlich zum Auskoppelgitter eine optische Sammeleinrichtung von in den freien Raum abgestrahlter, evaneszent angeregter Strahlung 21 vorzusehen, wobei die im Bereich jeder der Ausnehmungen 36, 39 evaneszent angeregte Strahlung einzeln analysierbar ist.

Die in den in Fig. 5 und Fig. 6, Fig. 7 und Fig. 8 sowie Fig. 9 dargestellten Flusszellen 26, 30, 35, 38 sind ebenfalls vorzugsweise aus dem Material der in Fig. 1 dargestellten und dort besprochenen Flusszelle 1 hergestellt. Bei der Herstellung der Flusszellen 1, 26, 30, 35, 38 in einem Abformverfahren sind in besonders einfacher Weise die unterschiedlichen Geometrien und Anordnungen der Ausnehmungen 6, 36, 39 herstellbar, so dass auch verhältnismässig komplizierte Geometrien beziehungsweise Ausrichtungen bei einer einmaligen Verwendung noch wirtschaftlich sind. In diesem Zusammenhang sei angemerkt, dass es bei den geringen Herstellungskosten auch zweckmässig ist, bei der Herstellung einer Vorrichtung zur Erzeugung evaneszent angeregter Strahlung 21 mit einer Flusszelle 1, 26, 30, 35, 38 bereits vor dem Einsatz in einigen Anwendungen erforderliche Markermoleküle zum Nachweis spezifischer Reaktionen oder Erkennungselemente zur spezifischen Bindung später nachzuweisender Analyten auf den Wellenleiter 7 aufzubringen. Diese Markermoleküle sind durch die darüberliegende Flusszelle 1, 26, 30, 35, 38 geschützt.

Es ist zweckmässig, dass alle Flusszellen 1, 26, 30, 35, 38 aus einem nahezu fluoreszenzfreien Material gefertigt sind, um Überlagerungen von in den Flusszellen 1, 26, 30, 35, 38 evaneszent angeregter Fluoreszenzstrahlung mit in Probenflüssigkeit 19 zur Analyse evaneszent angeregter Strahlung 21 in nennenswerten Umfang zu vermeiden. Es ist weiterhin zweckmässig, dass die Flusszellen 1, 26, 30, 35, 38 beispielsweise an den Stimseiten 9, 14, den Seitenflächen 11, 12 sowie der Deckfläche 4 strahlungsabsorbierend sind, um Einkopplungen von Umgebungsstrahlung in den Schichtwellenleiter 7 zu unterbinden.

In diesem Zusammenhang ist in Abwandlungen vorgesehen, dass die Flusszellen 1, 26, 30, 35, 38 bis auf einen unmittelbar an den Schichtwellenleiter 7 angrenzenden Eindringbereich für den evaneszenten Anteil der Anregungsstrahlung 18 und der evaneszent angeregten Strahlung 21 bei der Herstellung im innenbereich mit einem über den genutzten Spektralbereich absorbierenden Farbstoff versehen ist. Dadurch wird eine so gut wie vollständige Unterdrückung von Streulichteinkopplungen erzielt, die auch bei Beschädigungen der nach aussen weisenden Oberflächen 4, 9, 11, 12, 14 der Flusszellen 1, 26, 30, 35, 38 aufrechterhalten bleibt.

Die Herstellung der erfindungsgemässen Vorrichtung kann durch Zusammenfügen des planaren Wellenleiters und der vorgeformten Schicht (43) erfolgen, gegebenenfalls mit einem Haftvermittler. Vor dem Zusammenfügen kann die wellenleitende Schicht mit einem zu bestimmenden Zielmolekül immobilisiert werden, und/oder es können Licht absorbierende Schichten auf der wellenleitenden oder der vorgeformten Schicht aufgebracht werden. Ein anderes Herstellverfahren besteht darin, die Schicht (43) direkt auf der wellenleitenden Schicht herzustellen, zum Beispiel mit lichtempfindlichen Harzen und photolititographischen Verfahren.

Die erfindungsgemässen Vorrichtungen eignen sich zur Bestimmung von Zielmolekülen über eine Lumineszens erzeugende Wechselwirkung in der Analytprobe, wie es zum Beispiel besonders in der Affinitätssensorik üblich ist. Das Verfahren wird in an sich bekannter Weise so ausgeführt, dass man die Aussparungen mit einer Analytprobe füllt, dann Anregungsstrahlung einkoppelt und darauf die erzeugte Lumineszens misst, zum Beispiel Fluoreszensstrahlung. Besonders vorteilhaft für die Affinitätssensorik ist, dass man mit einem zu bestimmenden Zielmolekül immobilisierte erfindungsgemässe Vorrichtungen gegebenenfalls unter einer neutralen Flüssigkeit oder der Analytflüssigkeit zur Erzeugung von Lumineszens für längere Zeit lagem und die Messungen später gegebenenfalls mit weiteren gesammelten Proben in einem Arbeitsgang vomehmen kann. Als Anregungsstrahlung wird zweckmässig Laserlicht verwendet.

Gegenstand der Erfindung ist auch die Verwendung der erfindungsgemässen Vorrichtung zur Bestimmung von Zielmolekülen in der Affinitätssensorik.

Ein anderer Gegenstand der Erfindung ist ein Verfahren zur Bestimmung von Zielmolekülen, das dadurch gekennzeichnet ist, dass man (a) in Aussparungen der Vorrichtung gemäss den Ansprüchen 1 bis 10 eine Analytprobe füllt, (b) Anregungslicht über das diffraktive Element in den Wellenleiter einkoppelt, (c) lumineszierende Moleküle in der Analytprobe durch einen evaneszenten Anteil der Anregungsstrahlung zur Lumineszenz anregt, und (d) dann die erzeugte Lumineszens bestimmt.

## Patentansprüche

1. Vorrichtung zusammengesetzt aus (a) einem planaren optischen Wellenleiter, bestehend aus einem transparenten Träger (40) und einer wellenleitenden Schicht (41), wobei der Wellenleiter wenigstens über ein diffraktives Element (42) zur Einkopplung von Anregungsstrahlung in die wellenleitende Schicht und zur Erzeugung eines evaneszenten Feldes verfügt, **dadurch gekennzeichnet, dass** (b) auf dessen wellenleitender Schicht eine dicht verschliessende Schicht (43) aus einem Material aufliegt, das wenigstens an der Auflageoberfläche mindestens 0,5 µm sowohl für Anregungsstrahlung als auch für evaneszent angeregte Strahlung transparent ist, und das in wenigstens einem Teilbereich der geführten Anregungsstrahlung entweder wenigstens eine nach oben offene Aussparung (45), oder wenigstens eine über einen Zuflusskanal (2) und Abflusskanal (3) verbundene, nach oben geschlossene Aussparung (6) zur Aufnahme einer Analysenprobe aufweist, deren Tiefe wenigstens 0,5 µm beträgt, und wobei das diffraktive Element (42) von der dicht verschliessenden Schicht (43) vollständig bedeckt ist.

2. Vorrichtung gemäss Anspruch 1, **dadurch gekennzeichnet, dass** das Material für die dicht verschliessende Schicht (43) aus einem Elastomer von Polysiloxanen besteht.

3. Vorrichtung gemäss Anspruch 2, **dadurch gekennzeichnet, dass** die dicht verschliessende Schicht (43) direkt auf dem Wellenleiter aufgebracht ist.

4. Vorrichtung gemäss Ansprüchen 1 bis 3, **dadurch gekennzeichnet, dass** auf der wellenleitenden Schicht (41) direkt oder über eine dünne Haftvermittlungsschicht Erkennungselemente immobilisiert sind.

5. Vorrichtung gemäss Ansprüchen 1 bis 4, **dadurch gekennzeichnet, dass** die Tiefe der Aussparungen 0,5 µm bis 10 mm beträgt.

6. Vorrichtung gemäss Ansprüchen 1 bis 5, **dadurch gekennzeichnet, dass** ein zweites diffraktives Element (15) im Wellenleiter zur Auskopplung evaneszent angeregter und in den Wellenleiter zurückgekoppelter Strahlung vorhanden ist, das bevorzugt wenigstens im Auskoppelbereich der Anregungsstrahlung vom Material der dicht verschliessenden Schicht (43) bedeckt ist.

7. Vorrichtung gemäss Ansprüchen 1 bis 6, **dadurch gekennzeichnet, dass** 1 bis 100 Aussparungen vorgesehen sind.

8. Vorrichtung gemäss Ansprüchen 1 bis 7, **dadurch gekennzeichnet, dass** mehr als zwei Aussparungen vorhanden sind und zwischen den Aussparungen im Spektralbereich von Anregungsstrahlung und evaneszenter Strahlung absorbierendes Material vorgesehen ist.

9. Vorrichtung gemäss Ansprüchen 1 bis 8, **dadurch gekennzeichnet, dass** die dicht verschliessende Schicht (43) als zweilagige Schicht vorliegt, deren erste mit der Wellenleiteroberfläche in Kontakt gebracht ist, und welche bei Anregungswellenlängen und L umineszenswellenlängen des Analyten transparent und nicht lumineszierend ist, und die zweite anschliessende Deckschicht strahlungsabsorbierend ausgebildet ist.

10. Verfahren zur Bestimmung von Zielmolekülen, **dadurch gekennzeichnet, dass** man (a) in Aussparungen der Vorrichtung gemäss den Ansprüchen 1 bis 9 eine Analytprobe füllt, (b) Anregungslicht über das diffraktive Element in den Wellenleiter einkoppelt, (c) lumineszierende Moleküle in der Analytprobe durch einen evaneszenten Anteil der Anregungsstrahlung zur Lumineszenz anregt, und (d) dann die erzeugte Lumineszens bestimmt.

## Claims

1. A device comprising (a) a planar optical waveguide, consisting of a transparent carrier (40) and a wave-guiding layer (41), wherein the waveguide at least has a diffractive element (42) for coupling excitation radiation into the wave-guiding layer generating an evanescent field, **characterized in that** there is located on the wave-guiding layer a further, tightly sealing layer (43) made from a material which, at least at the support surface, is transparent both to the excitation radiation and to the evanescently excited radiation for at least 0.5 µm, and which, for an analysis sample, has, at least in a partial region of the guided excitation radiation, a cavity (45) which is open to the upper side or a cavity (6) which is closed to the upper side and connected by means of an inflow channel (2) and an outflow channel (3), the depth of the cavity corresponding at least to 0.5 µm, and wherein the diffractive element (42) is fully covered by the material of the layer (43).

2. A device according to claim 1, wherein the material for the tightly sealing layer (43) consists of a polysiloxane.

3. A device according to claim 2, wherein the tightly sealing layer (43) is directly attached to the waveguide.

4. A device according to claims 1 to 3, wherein recognition elements are immobilized directly or a via a thin adhesion layer on the wave-guiding layer (41).

5. device according to claims 1 to 4, wherein the depth of the cavities is from 0.5 µm to 10 mm.

6. A device according to claims 1 to 5, wherein a second diffractive element (15) is present in the waveguide for coupling out evanescently excited radiation that has been coupled back into the waveguide, which element is preferably covered, at least in the coupling-in region of the excitation radiation, by material of the layer (43).

7. A device according to claims 1 to 6, wherein from 1 to 100 cavities are provided.

8. A device according to claims 1 to 7, wherein material that absorbs in the spectral range of excitation radiation and evanescent radiation is provided between the cavities when more than two cavities are present.

9. A device according to claims 1 to 8, wherein the tightly sealing layer (43) is in the form of a layer having two strata, of which the first, which is brought into contact with the waveguide surface, is transparent and has no luminescence at the excitation wavelength and luminescence wavelength of the analyte, while the covering layer adjacent thereto is radiation-absorbing.

10. A method of determining target molecules, wherein (a) an analyte sample is introduced into the cavity of a device according to claim 1, (b) coupling in excitation light into the waveguide via the diffractive element, (c) exciting luminescent molecules in the analyte sample through the evanescent part of the excitation radiation, and (d) the luminescence generated is then determined.

## Revendications

1. Dispositif composé (a) d'un guide d'ondes optique plan, constitué d'un support transparent (40) et d'une couche guide d'ondes (41), le guide d'ondes comportant au moins un élément diffractif (42) destiné à injecter le rayonnement d'excitation dans la couche guide d'ondes et à engendrer un champ évanescent, **caractérisé en ce que** (b) sur la couche guidant les ondes dudit guide d'ondes se trouve une couche de fermeture étanche (43), composée d'un matériau qui est transparent au moins sur la surface de support d'au moins 0,5 µm aussi bien pour le rayonnement d'excitation que pour le rayonnement excité de façon évanescente, et qui, dans au moins une zone partielle du rayonnement d'excitation guidé, comprend au moins un évidement (45) ouvert vers le haut, ou au moins un évidement (6) fermé vers le haut, relié par un canal d'alimentation (2) et un canal d'évacuation (3), lequel évidement est destiné à recevoir un échantillon d'analyse, dont la profondeur mesure au moins 0,5 µm, et l'élément diffractif (42) étant entièrement recouvert par la couche de fermeture étanche (43).

2. Dispositif selon la revendication 1, **caractérisé en ce que** le matériau pour la couche de fermeture étanche (43) est constitué d'un élastomère de polysiloxanes.

3. Dispositif selon la revendication 2, **caractérisé en ce que** la couche de fermeture étanche (43) est appliquée directement sur le guide d'ondes.

4. Dispositif selon l'une quelconque des revendications 1 à 3, **caractérisé en ce que** des éléments de détection sont immobilisés sur la couche guidant les ondes (41), directement ou par l'intermédiaire d'une mince couche d'agent adhésif.

5. Dispositif selon l'une quelconque des revendications 1 à 4, **caractérisé en ce que** la profondeur des évidements mesure de 0,5 µm à 10 mm.

6. Dispositif selon l'une quelconque des revendications 1 à 5, **caractérisé en ce qu'**un second élément diffractif (15) est présent dans le guide d'ondes pour déclencher un rayonnement excité de façon évanescente et réinjecté dans le guide d'ondes, lequel élément est recouvert de préférence, au moins dans la zone de déclenchement du rayonnement d'excitation, par le matériau de la couche de fermeture étanche (43).

7. Dispositif selon l'une quelconque des revendications 1 à 6, **caractérisé en ce que** de 1 à 100 évidements sont prévus.

8. Dispositif selon l'une quelconque des revendications 1 à 7, **caractérisé en ce que** plus de deux évidements sont présents et un matériau absorbant est prévu entre les évidements dans la zone spectrale du rayonnement évanescent et du rayonnement d'excitation.

9. Dispositif selon l'une quelconque des revendications 1 à 8, **caractérisé en ce que** la couche de fermeture étanche (43) présente deux couches, dont la première couche est amenée en contact avec la surface du guide d'ondes, et laquelle, dans le cas de longueurs d'onde d'excitation et de longueurs d'onde de luminescence de l'analyte, est transparente et n'est pas luminescente, et la seconde couche de recouvrement contiguë est conçue pour absorber le rayonnement.

10. Procédé de détermination de molécules cibles, **caractérisé en ce que** (a) on verse, dans des évidements du dispositif selon l'une quelconque des revendications 1 à 9, un échantillon d'analyte, (b) on injecte une lumière d'excitation dans le guide d'ondes par l'intermédiaire de l'élément diffractif, (c) on excite des molécules luminescentes dans l'échantillon d'analyte à travers une part évanescente du rayonnement d'excitation par rapport à la luminescence, et (d) on détermine ensuite la luminescence générée.
